# EUROPEAN PATENT APPLICATION

(11) **EP 2 871 408 A1**
(43) Date of publication of application: **13.05.2015**
(21) Application number: 14189678.7
(22) Date of filing: 21.10.2014
(51) Int. Cl.: F21V 8/00

(54) **Backlight unit and display device including the same**

(30) Priority: 11.11.2013 KR 20130136297
(71) Applicant: LG Display Co., Ltd., Seoul 150-721 (KR)
(72) Inventor: Oh, Seok-Hwan, 730-755 Gyeongsangbuk-do (KR); Kweon, Young-Min, 413-833 Paju-si, Gyeonggi-do (KR); Jo, Du-Ho, 413-902 Paju-si, Gyeonggi-do (KR)
(74) Representative: Viering, Jentschura & Partner Patent- und Rechtsanwälte

(57) **Abstract**

The present invention provides a backlight unit including a light source providing a blue light; a light guide plate of glass at a side of the light source; an optical sheet on the light guide plate; a reflective sheet under the light guide plate; and an optic change part including a yellow fluorescent material, wherein the blue light is changed into a white light by the optical change part.

## Description

The present application claims the benefit of Korean Patent Application No. 10-2013-0136297 filed in Korea on November 11, 2013, which is hereby incorporated by reference in its entirety.

### BACKGROUND OF THE INVENTION

### FIELD OF THE INVENTION

The present invention relates to a display device and more particularly to a backlight unit and a display device including the backlight unit.

### DISCUSSION OF THE RELATED ART

The related art LCD device uses optical anisotropy and polarization properties of liquid crystal molecules. The transmissivity of the liquid crystal molecules is changed by an electric field such that the LCD device displays images.

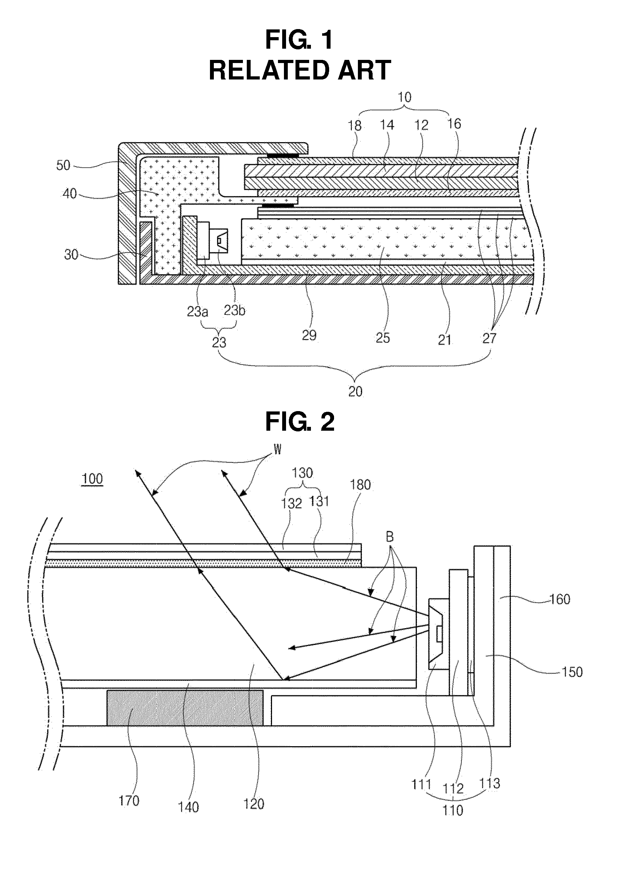

As shown in FIG. 1, which is a schematic cross-sectional view of the related art LCD device, the LCD device includes a liquid crystal panel 10, a backlight unit 20, a bottom frame 30, a main frame 40, and a top frame 50.

The liquid crystal panel 10 includes a thin film transistor (TFT) substrate 12, a color filter substrate 14 facing the TFT substrate, and a liquid crystal layer (not shown) therebetween.

First and second polarizing plates 16 and 18 are attached on lower and upper sides of the liquid crystal panel 10.

The backlight unit 20 includes a reflective sheet 21, a light source 23, a light guide plate 25, an optical sheet 27 and a housing 29 supporting the light source 23.

The reflective sheet 21 reflects the light leaked from the light guide plate 23 toward the liquid crystal panel 10.

The light source 23 includes a printed circuit board (PCB) 23a and a light emitting diode (LED) 23b. An external voltage is supplied to an LED package by the PCB 23a.

The light guide plate 25 provides the light from the light source 23 into the liquid crystal panel 10. The light guide plate 25 may be formed of poly methyl methacrylate (PMMA) or glass.

The light from the light guide plate 25 is diffused and concentrated by the optical sheet 27 and is provided onto the liquid crystal panel 10.

The bottom frame 30 has a space for the light source 23, the reflective sheet 21, the light guide plate 25 and the optical sheet 27. In addition, the bottom frame 30 supports the main frame 40.

The main frame 40 supports the liquid crystal panel 10. The main frame 40 may include a panel supporting part for supporting the liquid crystal panel 10 and a side wall covering the backlight unit 20.

The top frame 50 covering front edges of the liquid crystal panel 10 and a side of the main frame 40 and the bottom frame 30.

In the related art LCD device, the light source 23 includes the LED package, and the light guide plate 25 includes glass.

Due to the properties of the material of the light guide plate 25, a difference in the color coordinate and the color sense between a first side of the light guide plate 25, which faces the light source 23, and a second side of the light guide plate 25, which opposite to the first side, is generated. As a result, the image quality of the LCD device is degraded.

### SUMMARY OF THE INVENTION

Accordingly, the present invention is directed to a backlight unit and a display device including the same that substantially obviate one or more of the problems due to limitations and disadvantages of the related art.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described herein, the present invention provides a backlight unit including a light source providing a blue light; a light guide plate of glass at a side of the light source; an optical sheet on the light guide plate; a reflective sheet under the light guide plate; and an optic change part including a yellow fluorescent material, wherein the blue light is changed into a white light by the optical change part.

In another aspect, the present invention provides a display device including a liquid crystal panel; and a backlight unit disposed under the liquid crystal panel and providing a light to the liquid crystal panel, the backlight unit including: a light source providing a blue light; a light guide plate of glass at a side of the light source; an optical sheet on the light guide plate; a reflective sheet under the light guide plate; and an optic change part including a yellow fluorescent material, wherein the blue light is changed into a white light by the optical change part.

In one or more embodiments, the light source includes: a printed circuit board; a blue light emitting diode array arranged on a first surface of the printed circuit board; and a heat-radiating part on a second surface of the printed circuit board.

In one or more embodiments, the backlight unit further comprises: a housing on an inner side of which the light source is attached; a bottom frame providing a space for the light source, the light guide plate, the optical sheet and the reflective sheet; and a supporting part between the bottom frame and the reflective sheet and supporting the light guide plate and the reflective sheet.

In one or more embodiments, the optic change part is disposed over or under the light guide plate.

In one or more embodiments, the optic change part includes: a base layer; and a cover layer, wherein the yellow fluorescent material is positioned between the base layer and the cover layer, and each of the base layer and the cover layer includes one of polycarbonate (PC), PMMA, polystyrene (PS), a co-polymer of PS and PMMA and glass.

In one or more embodiments, the optic change part includes a base layer, wherein the yellow fluorescent material is coated on the base layer, and the base layer includes one of polycarbonate (PC), PMMA, polystyrene (PS), a co-polymer of PS and PMMA and glass.

In one or more embodiments, the optic change part is disposed on an upper surface or a lower surface of the light guide plate.

In one or more embodiments, the optic change part includes a yellow fluorescent ink including a yellow fluorescent material in a transparent acryl resin.

In one or more embodiments, the optic change part is disposed on an upper surface or a lower surface of the reflective sheet.

In one or more embodiments, the optic change part includes a yellow fluorescent ink including a yellow fluorescent material in a transparent acryl resin.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
FIG. 1 is a schematic cross-sectional view of the related art LCD device.
FIG. 2 is a schematic cross-sectional view of a backlight unit according to the present invention.
FIG. 3 is a perspective view of an optic change part of the present invention.
FIGs. 4A and 4B are cross-sectional views of modified optic change part.
FIGs. 5A to 5C are graphs explaining optical properties in backlight units.
FIG. 6 is a schematic cross-sectional view of a backlight unit according to the present invention.
FIG. 7 is a schematic cross-sectional view of a backlight unit according to the present invention.
FIG. 8 is a plane view of a lower surface of the light guide plate in FIG. 7.
FIG. 9 is a schematic cross-sectional view of a backlight unit according to the present invention.
FIG. 10 is a schematic cross-sectional view of a backlight unit according to the present invention.
FIG. 11 is a schematic cross-sectional view of a backlight unit according to the present invention.
FIG. 12 is a schematic cross-sectional view of a display device according to the present invention.
FIG. 13 is a schematic cross-sectional view of a display device according to the present invention.
FIG. 14 is a schematic cross-sectional view of a display device according to the present invention.
FIG. 15 is a schematic cross-sectional view of a display device according to the present invention.
FIG. 16 is a schematic cross-sectional view of a display device according to the present invention.
FIG. 17 is a schematic cross-sectional view of a display device according to the present invention.

### DETAILED DESCRIPTION OF THE PREFERRED EMBODIMENTS

Reference will now be made in detail to the embodiments of the present disclosure, examples of which are illustrated in the accompanying drawings.

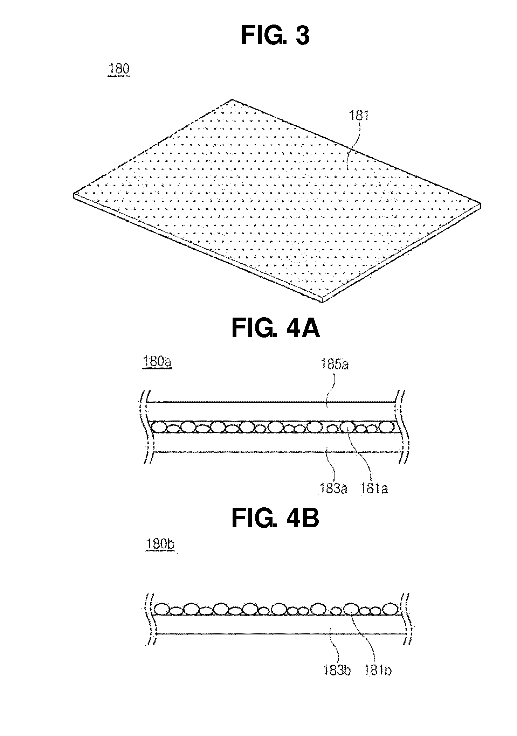

FIG. 2 is a schematic cross-sectional view of a backlight unit according to the present invention, and FIG. 3 is a perspective view of an optic change part of the present invention. FIGs. 4A and 4B are cross-sectional views of modified optic change part.

As shown in FIG. 2, the backlight unit 100 includes a light source 110 providing a blue light B, a light guide plate 120, an optical sheet 130, a reflective sheet 140, a housing 150, a bottom frame 160, a supporting part 170 and an optic change part 180.

The light source 110 includes a blue LED array 111, a PCB 112 and a heat-radiating part 113.

In more detail, the blue LED array 111 emitting the blue light B is arranged on a first surface of the PCB 112. The blue LED array 111 receives a power from an outer part through the PCB 112.

The heat-radiating part 113 is combined to a second surface of the PCB 112. The heat from the blue LED array 111 is radiated into an outer space by the heat-radiating part 113. Since the heat from the blue LED array 111 is radiated into the housing 150, increase of a temperature in the backlight unit 120 can be prevented. As a result, thermal deformation of the light guide plate 120 by the heat from the blue LED array 111 is also prevented.

The light guide plate 120 is disposed at a side of the light source 110, and the light B from the blue LED array 111 is provided through an upper surface of the light guide plate 120. In other words, the light source 110 is positioned at a side of the light guide plate 120.

The light guide plate 120 is formed of a material having light transmittance above about 90%. The light guide plate 120 is formed of PMMA or glass, and beneficially glass having a relatively smaller expansion rate with respect to moisture or temperature. For example, the light guide plate 120 may be formed of soda lime glass, borosilicate glass or quartz glass.

The optical sheet 130 is disposed over the upper surface of the light guide plate 120. The light is diffused and concentrated by the optical sheet 130. For example, the optical sheet 130 includes a light-diffusion sheet 131 and a light-concentration sheet 132.

The optic change part 180 is positioned between the light guide plate 120 and the optical sheet 130. Referring to FIG. 3, the optic change part 180 includes a yellow fluorescent material 181. The yellow fluorescent material 181 may be a mixture of a green fluorescent material and a red fluorescent material. Alternatively, the yellow fluorescent material 181 may be a single yellow fluorescent material. The optic change part 180 serves as an optical sheet as well as a changing layer of the color of the light.

For example, as shown in FIG. 4A, the optic change part 180a may include a base layer 183a, a cover layer 185a and the yellow fluorescent material 181a therebetween.

Each of the base layer 183a and the cover layer 185a may be formed of one of polycarbonate (PC), PMMA, polystyrene (PS), a co-polymer of PS and PMMA and glass. The base layer 183a is formed of the same material as or a different material from the cover layer 185a.

As shown in FIG. 4B, the optic change part 180b may include a base layer 183b and the yellow fluorescent material 181b coated on the base layer 183b. The base layer 183b may be formed of one of polycarbonate (PC), PMMA, polystyrene (PS), a co-polymer of PS and PMMA and glass.

After the blue light B from the blue LED array 111 passes through the light guide plate 120 of glass, the blue light B is incident onto the optic change part 180 to be a white light W by the yellow fluorescent material 181 in the optic change part 180.

The light-diffusion sheet 131 diffuses the white light W and controls a direction of the white light W into the light-concentration sheet 132.

The light-concentration sheet 132 may include a prism pattern (not shown), and the white light W through the light-diffusion sheet 131 is concentrated into the liquid crystal panel (not shown) by the light-concentration sheet 132.

In FIG. 2, the light-concentration sheet 132 is disposed on the light-diffusion sheet 131. Alternatively, the light-diffusion sheet 131 may be disposed on the light-concentration sheet 132.

In FIG. 2, the optic change part 180 is disposed between the optical sheet 130 and the light guide plate 120. Alternatively, the optical change part 180 may be disposed on the optical sheet 130 or between the light-diffusion sheet 131 and the light-concentration sheet 132.

The reflective sheet 140 reflects the blue light B leaked from the light guide plate 120 toward the liquid crystal panel (not shown).

The housing 150 includes a relatively high thermal conductivity material. For example, the housing 150 may include aluminum (Al).

The housing 150 includes an inner side surface, where the light source 110 is attached, and a horizontal bottom surface, which is vertically bent from the side surface, under the reflective sheet 140.

The bottom frame 160 includes side surfaces and a horizontal bottom surface to provide a space for the light source 110, the light guide plate 120, the optical sheet 130, the reflective sheet 140 and the optic change part 180.

Since the bottom frame 160 is attached to the side surface of the housing 150, the heat from the blue LED array 111 is radiated into an outer space through the heat-radiation part 113, the housing 150 and the bottom frame 160.

The supporting part 170 is positioned between the horizontal bottom surface of the bottom frame 160 and the reflective sheet 140 to support the reflective sheet 140 and the light guide plate 120.

Since the light guide plate 120 is formed of glass and the reflective sheet 140 is formed of polycarbonate-based material, the supporting part 170 is formed of an elastic material, e.g., silicon, rubber, polyethylene terephthalate (PET) or polycarbonate.

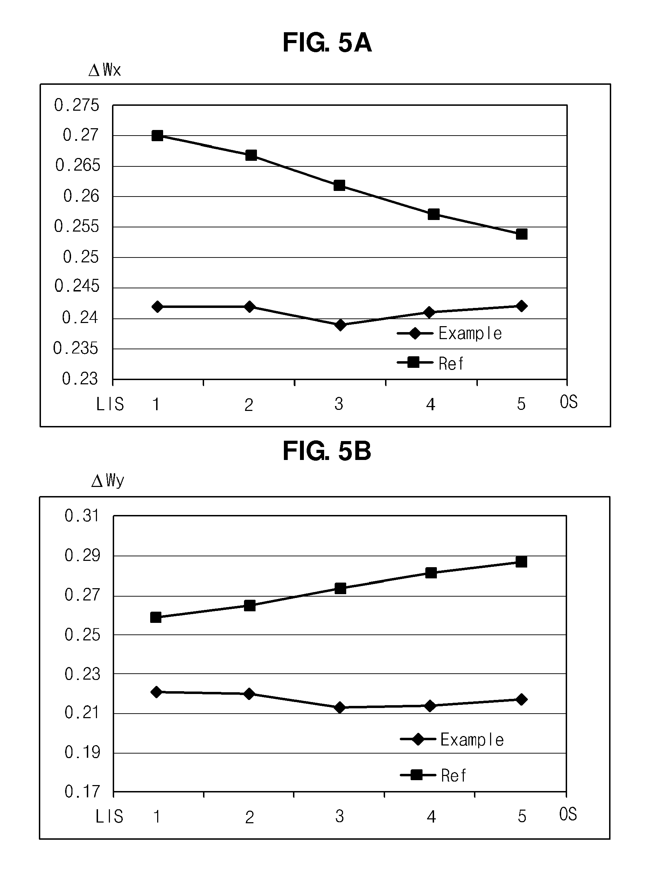

FIGs. 5A to 5C are graphs explaining optical properties in backlight units. The backlight unit "Ref" includes a glass light guide plate without an optic change part, while the backlight unit "Example" includes a glass light guide plate with an optical change part. The difference (Δ Wx and Δ Wy) of the color coordinate index between a light-incident side (LIS) of the light guide plate and an opposite side (OS) of the light guide plate and the difference (Δ uv) of the color sense between the light-incident side of the light guide plate and the opposite side of the light guide plate are listed in table 1.

**Table 1**

| | Δ Wx | Δ Wy | Δ uv |
|---|---|---|---|
| Ref. | 0.016 | 0.028 | 0.025 |
| Example | 0 | 0.004 | 0.003 |

As shown in FIG. 5A and table 1, the difference (Δ Wx) of the white color coordinate index between a light-incident side of the light guide plate and an opposite side of the light guide plate is 0.016 in the backlight unit "Ref" and zero (0) in the backlight unit "Example".

As shown in FIG. 5B and table 1, the difference (Δ Wy) of the white color coordinate index between a light-incident side of the light guide plate and an opposite side of the light guide plate is 0.028 in the backlight unit "Ref" and 0.004 in the backlight unit "Example".

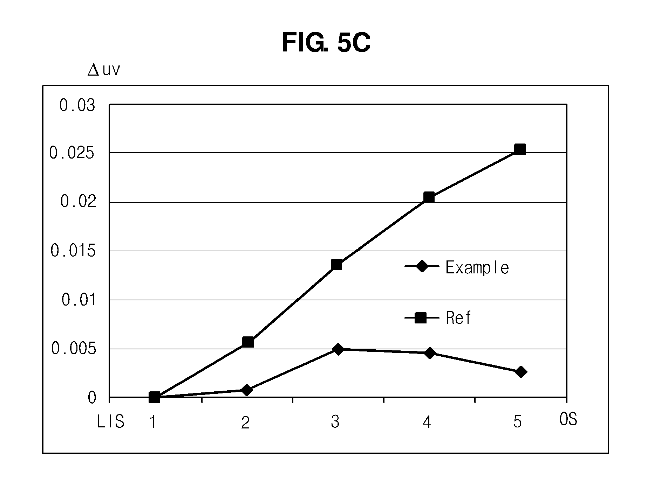

As shown in FIG. 5C and table 1, the difference (Δ uv) of the color sense between the light-incident side of the light guide plate and the opposite side of the light guide plate is 0.025 in the backlight unit "Ref" and 0.003 in the backlight unit "Example".

It is preferred that each of the difference (Δ Wy) of the white color coordinate index and the difference (Δ uv) of the color sense has a value below 0.004. Accordingly, as shown in FIGs. 5A to 5C and table 1, the backlight unit of the present invention, which includes a glass light guide plate with an optical change part, has advantages in the color purity and the color sense.

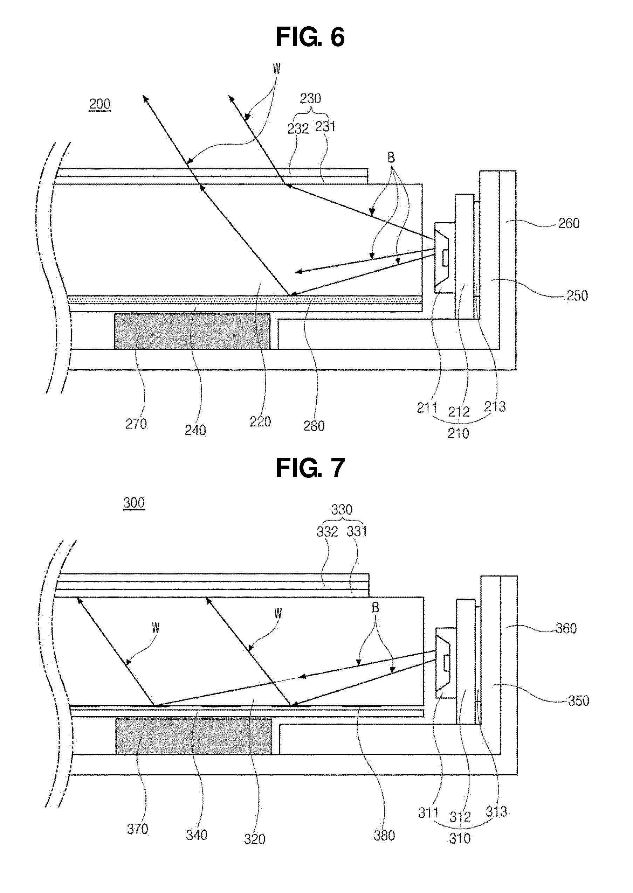

FIG. 6 is a schematic cross-sectional view of a backlight unit according to the present invention. The explanation is focused on a difference from the backlight unit in FIG. 2.

As shown in FIG. 6, the backlight unit 200 includes a light source 210, a light guide plate 220, an optical sheet 230, a reflective sheet 240, a housing 250, a bottom frame 260, a supporting part 270 and an optic change part 280.

The optic change part 280 is disposed under the light guide plate 220. Namely, the optic change part 280 is positioned between the light guide plate 220 and the reflective sheet 240.

The optic change part 280 may have various structures and may include various materials explained with references to FIGs. 3, 4A and 5B.

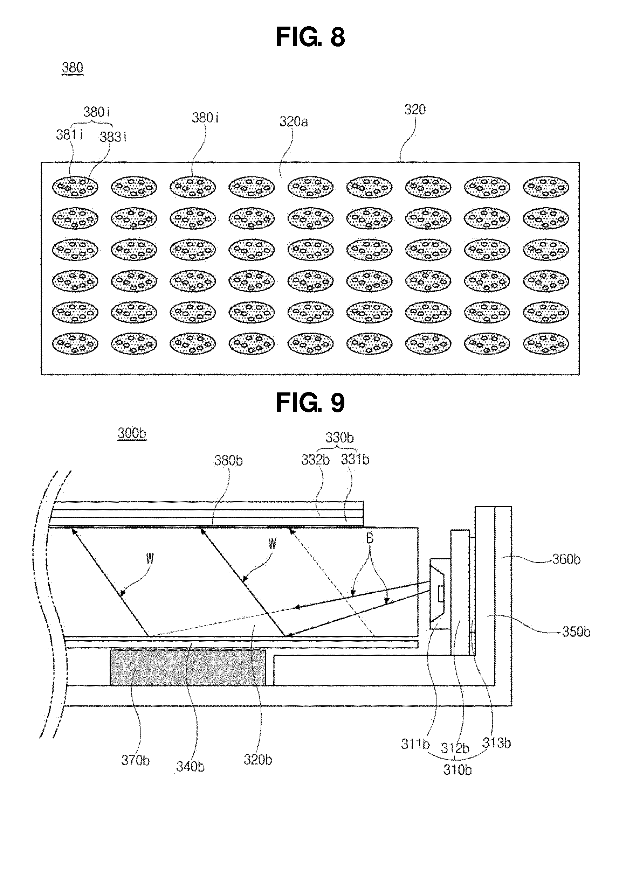

FIG. 7 is a schematic cross-sectional view of a backlight unit according to the present invention, and FIG. 8 is a plane view of a lower surface of the light guide plate in FIG. 7. The explanation is focused on a difference from the backlight units in FIGs. 2 and 6.

As shown in FIG. 7, the backlight unit 300 includes a light source 310 providing a blue light B, a light guide plate 320, an optical sheet 330, a reflective sheet 340, a housing 350, a bottom frame 360, a supporting part 370 and an optic change part 380.

The light guide plate 320 is formed of a material having light transmittance above about 90%. The light guide plate 320 is formed of PMMA or glass, and beneficially glass having a relatively smaller expansion rate with respect to moisture or temperature.

The optic change part 380 is disposed on a lower surface of the light guide plate 320. The blue light B from the light source 310 is changed into a white light W by the optic change part 380. Alternatively, the backlight unit 300 may further include another optic change part on an upper surface of the light guide plate 320.

Referring to FIG. 8, the optic change part 380 includes a yellow fluorescent ink 380i. The yellow fluorescent ink 380i includes a yellow fluorescent material 381i in a transparent acryl resin 383i.

A size of the yellow fluorescent material 381i is determined considering transmittance and a haze value of the light guide plate 320 and compatibility with the transparent aryl resin 383i. For example, the yellow fluorescent material 381i may have a size less than about 10 micrometers.

Since the optic change part 380 is formed of an ink, the ink is coated on the light guide plate 320 to form the optic change part 380 using an ink-jet apparatus.

In FIG. 6, the optic change part 280 has a layer shape. However, the optic change part 380 in FIG. 7 is formed on the light guide plate 320 as patterns.

When the blue light B from the blue LED array 111 is incident to the light guide plate 320 of glass, the blue light B is processed into a white light W by the yellow fluorescent ink 380i in the optic change part 380.

FIG. 9 is a schematic cross-sectional view of a backlight unit according to the present invention.

As shown in FIG. 9, the backlight unit 300b includes a light source 310b providing a blue light B, a light guide plate 320b, an optical sheet 330b, a reflective sheet 340b, a housing 350b, a bottom frame 360b, a supporting part 370b and an optic change part 380b.

The optic change part 380b is disposed on an upper surface of the light guide plate 320b. The blue light B from the light source 310b is changed into a white light W by the optic change part 380b. Alternatively, the backlight unit 300b may further include another optic change part on a lower surface of the light guide plate 320b.

The materials and the shapes of the optic change part 380b are similar to those explained with reference to FIGs. 7 and 8.

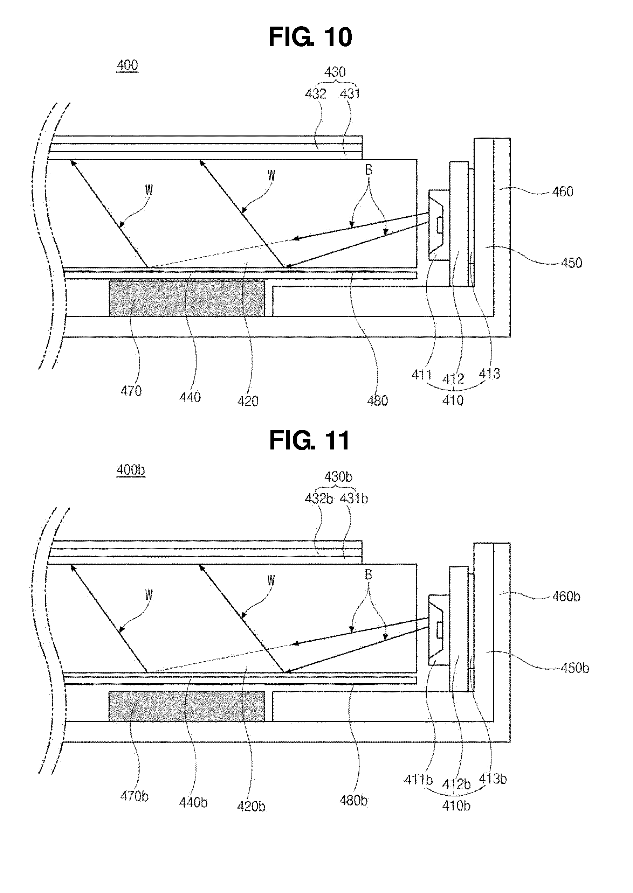

FIG. 10 is a schematic cross-sectional view of a backlight unit according to the present invention.

As shown in FIG. 10, the backlight unit 400 includes a light source 410 providing a blue light B, a light guide plate 420, an optical sheet 430, a reflective sheet 440, a housing 450, a bottom frame 460, a supporting part 470 and an optic change part 480.

The optic change part 480 is disposed on an upper surface of the reflective sheet 440. The optic change part 480 includes a yellow fluorescent ink 380i (of FIG. 8). The yellow fluorescent ink 380i includes a yellow fluorescent material 381i (of FIG. 8) in a transparent acryl resin 383i (of FIG. 8).

The blue light B from the light source 410 is changed into a white light W by the optic change part 480. Namely, the leaked light from the light guide plate 420 is reflected by the reflective sheet 440, and the blue light B is changed into the white light W by the optic change part 480 on the reflective sheet 440.

Alternatively, the backlight unit 400 may further include another optic change part on a lower surface of the reflective sheet 440.

FIG. 11 is a schematic cross-sectional view of a backlight unit according to the present invention.

As shown in FIG. 11, the backlight unit 400b includes a light source 410b providing a blue light B, a light guide plate 420b, an optical sheet 430b, a reflective sheet 440b, a housing 450b, a bottom frame 460b, a supporting part 470b and an optic change part 480b.

The optic change part 480b is disposed on a lower surface of the reflective sheet 440b. In this instance, a protection sheet (not shown) may be attached onto the lower surface of the reflective sheet 440b to protect the optic change part 480b. Namely, the optic change part 480b is disposed between the reflective sheet 440b and the protection sheet.

The optic change part 480b includes a yellow fluorescent ink 380i (of FIG. 8). The yellow fluorescent ink 380i includes a yellow fluorescent material 381i (of FIG. 8) in a transparent acryl resin 383i (of FIG. 8).

The blue light B from the light source 410b is changed into a white light W by the optic change part 480b. Namely, the leaked light from the light guide plate 420b is reflected by the reflective sheet 440b, and the blue light B is changed into the white light W by the optic change part 480b on the reflective sheet 440b.

Alternatively, the backlight unit 400b may further include another optic change part on an upper surface of the reflective sheet 440b.

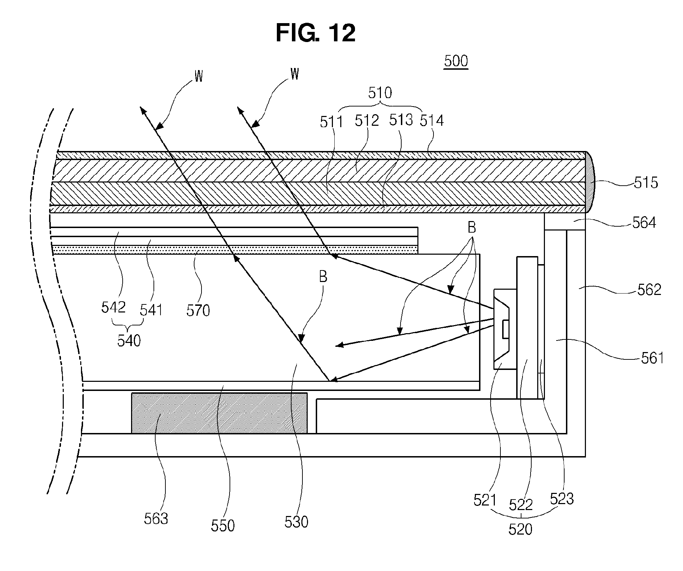

FIG. 12 is a schematic cross-sectional view of a display device according to the present invention.

As shown in FIG. 12, the display device 500 includes a liquid crystal panel 510 and a backlight unit including a light source 520 providing a blue light B, a light guide plate 530, an optical sheet 540, a reflective sheet 550, a housing 561, a bottom frame 562 and an optic change part 570. The backlight unit is disposed under the liquid crystal panel 510 and provides a white light W onto the liquid crystal panel 510.

The liquid crystal panel 510 includes an array substrate 511, a color filter substrate 512 and a liquid crystal layer (not shown) therebetween).

A first polarization plate 513 for polarizing the light from the light source 520 of the backlight unit is attached to a lower side of the liquid crystal panel 510, and a second polarization plate 514 is attached to an upper side of the liquid crystal panel 510.

In addition, a sealing part 515 for preventing damages on the liquid crystal panel 510 by an outer impact and preventing light leakage is formed at side surfaces of the liquid crystal panel 510.

The light from the light source 520 passes through the liquid crystal layer such that the liquid crystal panel 510 displays images.

The light source 520 includes a blue LED array 521, a PCB 522 and a heat-radiating part 523.

In more detail, the blue LED array 521 emitting the blue light B is arranged on a first surface of the PCB 522 of a flexible material. The blue LED array 521 receives a power from an outer part through the PCB 522.

The heat-radiating part 523 is combined to a second surface of the PCB 522. The heat from the blue LED array 521 is radiated into an outer space by the heat-radiating part 523. Since the heat from the blue LED array 521 is radiated into the housing 561, increase of a temperature in the backlight unit can be prevented. As a result, thermal deformation of the light guide plate 530 by the heat from the blue LED array 521 is also prevented.

The light guide plate 530 is disposed at a side of the light source 520, and the light B from the blue LED array 521 is provided through an upper surface of the light guide plate 530. In other words, the light source 520 is positioned at a side of the light guide plate 530.

The light guide plate 530 is formed of a material having light transmittance above about 90%. The light guide plate 530 is formed of PMMA or glass, and beneficially glass.

The optical sheet 540 is disposed over the upper surface of the light guide plate 530. The light is diffused and concentrated by the optical sheet 540. For example, the optical sheet 540 includes a light-diffusion sheet 541 and a light-concentration sheet 542.

The optic change part 570 has substantially the same shape, the same position and the same material as the optic change part 180 in FIGs. 3, 4A and 4B.

After the blue light B from the blue LED array 521 passes through the light guide plate 530 of glass, the blue light B is incident onto the optic change part 570 to be a white light W by the yellow fluorescent material in the optic change part 570.

The light-diffusion sheet 541 diffuses the white light W from the optic change part 570 and controls a direction of the white light W into the light-concentration sheet 542.

The light-concentration sheet 542 may include a prism pattern (not shown), and the white light W through the light-diffusion sheet 541 is concentrated into the liquid crystal panel 510 by the light-concentration sheet 542.

In FIG. 12, the light-concentration sheet 542 is disposed on the light-diffusion sheet 541. Alternatively, the light-diffusion sheet 541 may be disposed on the light-concentration sheet 542.

In FIG. 12, the optic change part 570 is disposed between the optical sheet 540 and the light guide plate 530. Alternatively, the optical change part 570 may be disposed on the optical sheet 540 or between the light-diffusion sheet 541 and the light-concentration sheet 542.

The reflective sheet 440 reflects the blue light B leaked from the light guide plate 430 toward the liquid crystal panel 510.

The housing 561 includes a relatively high thermal conductivity material. For example, the housing 561 may include aluminum (Al).

The housing 561 includes an inner side surface, where the light source 520 is attached, and a horizontal bottom surface, which is vertically bent from the side surface, under the reflective sheet 550.

The bottom frame 562 includes side surfaces and a horizontal bottom surface to provide a space for the light source 520, the light guide plate 530, the optical sheet 540, the reflective sheet 550 and the optic change part 570.

Since the bottom frame 562 is attached to the side surface of the housing 561, the heat from the blue LED array 521 is radiated into an outer space through the heat-radiation part 523, the housing 561 and the bottom frame 562.

The display device 500 may further include a supporting part 563. The supporting part 563 is positioned between the horizontal bottom surface of the bottom frame 562 and the reflective sheet 550 to support the reflective sheet 550 and the light guide plate 530.

Since the light guide plate 530 is formed of glass and the reflective sheet 550 is formed of polycarbonate-based material, the supporting part 563 is formed of an elastic material, e.g., silicon, rubber, polyethylene terephthalate (PET) or polycarbonate.

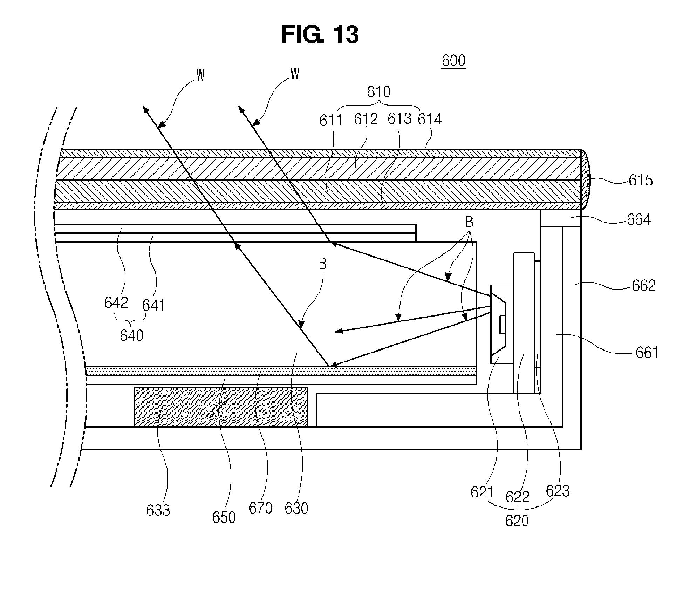

FIG. 13 is a schematic cross-sectional view of a display device according to the present invention.

As shown in FIG. 13, the display device 600 includes a liquid crystal panel 610 and a backlight unit including a light source 620 providing a blue light B, a light guide plate 630, an optical sheet 640, a reflective sheet 650, a housing 661, a bottom frame 662 and an optic change part 670. The backlight unit is disposed under the liquid crystal panel 610 and provides a white light W onto the liquid crystal panel 610.

The optic change part 670 is disposed under the light guide plate 630. Namely, the optical change part 670 is positioned between the light guide plate 630 and the reflective sheet 650.

The shape or structure and the material of the optic change part 670 are modified as explained above.

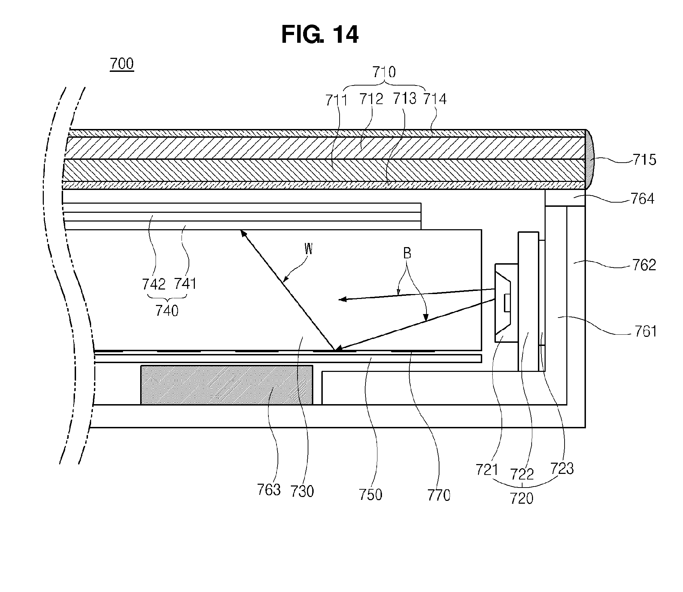

FIG. 14 is a schematic cross-sectional view of a display device according to the present invention.

As shown in FIG. 14, the display device 700 includes a liquid crystal panel 710 and a backlight unit including a light source 720 providing a blue light B, a light guide plate 730, an optical sheet 740, a reflective sheet 750, a housing 761, a bottom frame 762 and an optic change part 770. The backlight unit is disposed under the liquid crystal panel 710 and provides a white light W onto the liquid crystal panel 710.

The light guide plate 730 is formed of a material having light transmittance above about 90%. The light guide plate 7300 is formed of PMMA or glass, and beneficially glass.

The optic change part 770 is disposed on a lower surface of the light guide plate 730. The blue light B from the light source 720 is changed into a white light W by the optic change part 770. Alternatively, the backlight unit may further include another optic change part on an upper surface of the light guide plate 730.

As explained with reference to FIGs. 7 and 8, the optic change part 770 includes a yellow fluorescent ink 380i as the optic change part 380. The yellow fluorescent ink 380i includes a yellow fluorescent material 381i in a transparent acryl resin 383i.

A size of the yellow fluorescent material 381i is determined considering transmittance and a haze value of the light guide plate 730 and compatibility with the transparent aryl resin 383i. For example, the yellow fluorescent material 381i may have a size less than about 10 micrometers.

Since the optic change part 770 is formed of an ink, the ink is coated on the light guide plate 730 to form the optic change part 770 using an ink-jet apparatus.

When the blue light B from the blue LED array 721 is incident to the light guide plate 730 of glass, the blue light B is processed into a white light W by the yellow fluorescent ink 380i in the optic change part 770.

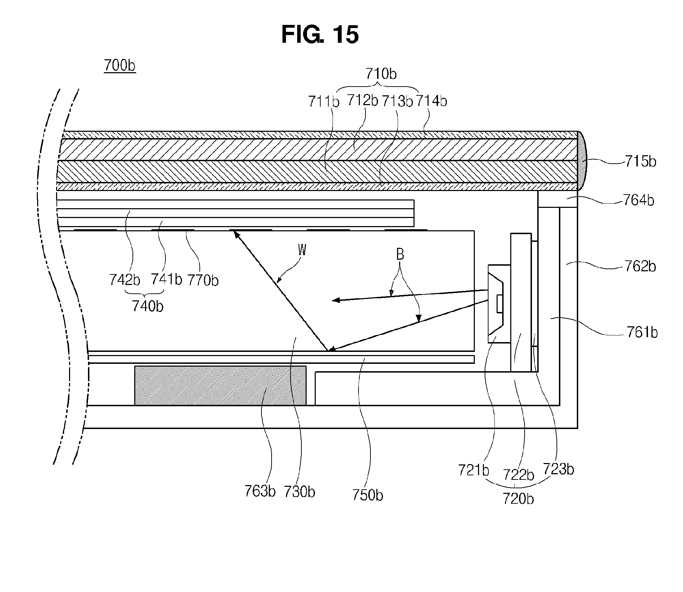

FIG. 15 is a schematic cross-sectional view of a display device according to the present invention.

As shown in FIG. 15, the display device 700b includes a liquid crystal panel 710b and a backlight unit including a light source 720b providing a blue light B, a light guide plate 730b, an optical sheet 740b, a reflective sheet 750b, a housing 761b, a bottom frame 762b and an optic change part 770b. The backlight unit is disposed under the liquid crystal panel 710b and provides a white light W onto the liquid crystal panel 710b.

The optic change part 770b is disposed on an upper surface of the light guide plate 730b. The blue light B from the light source 720b is changed into a white light W by the optic change part 770b. Alternatively, the backlight unit may further include another optic change part on a lower surface of the light guide plate 730b.

When the blue light B from the light source 720b is incident to the light guide plate 730b, the blue light B is processed into a white light W by the optic change part 770b.

The materials and the shapes of the optic change part 770b are similar to those explained with reference to FIGs. 7 and 8.

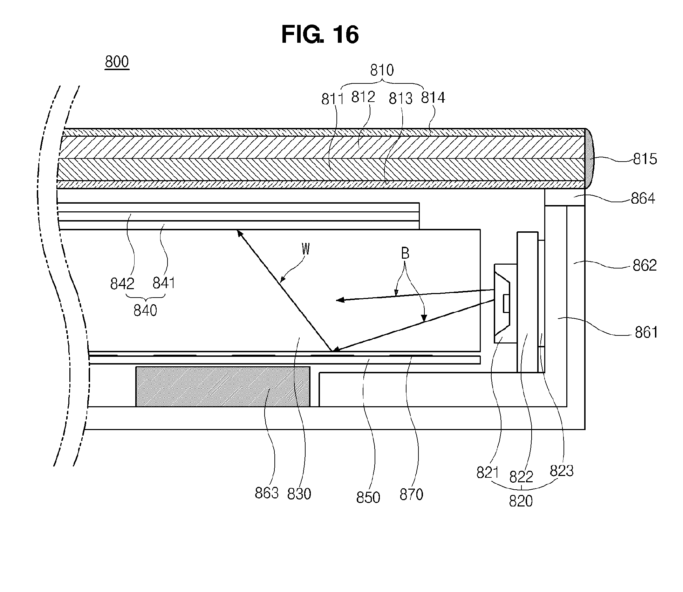

FIG. 16 is a schematic cross-sectional view of a display device according to the present invention.

As shown in FIG. 16, the display device 800 includes a liquid crystal panel 810 and a backlight unit including a light source 820 providing a blue light B, a light guide plate 830, an optical sheet 840, a reflective sheet 850, a housing 861, a bottom frame 862 and an optic change part 870. The backlight unit is disposed under the liquid crystal panel 810 and provides a white light W onto the liquid crystal panel 810.

The optic change part 870 is disposed on an upper surface of the reflective sheet 850. Alternatively, the backlight unit may further include another optic change part on a lower surface of the reflective sheet 850.

The optic change part 870 includes a yellow fluorescent ink 380i (of FIG. 8). The yellow fluorescent ink 380i includes a yellow fluorescent material 381i (of FIG. 8) in a transparent acryl resin 383i (of FIG. 8).

The blue light B from the light source 820 is changed into a white light W by the optic change part 870. Namely, the leaked light from the light guide plate 830 is reflected by the reflective sheet 850, and the blue light B is changed into the white light W by the optic change part 870 on the reflective sheet 850.

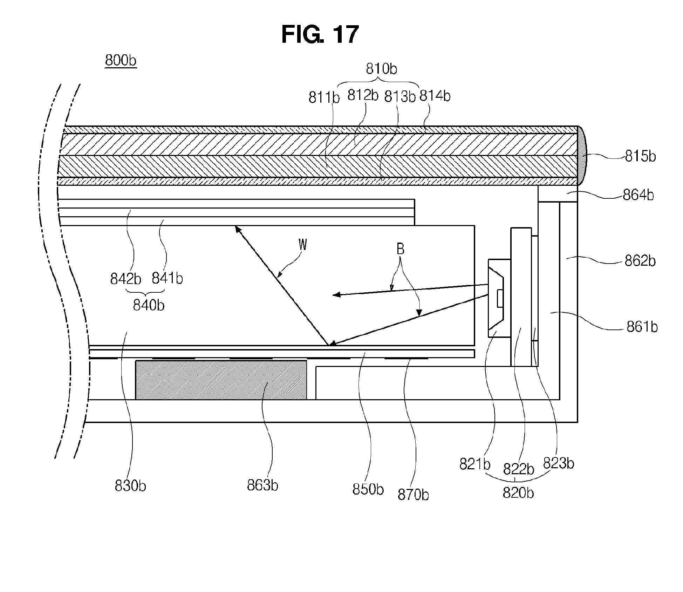

FIG. 17 is a schematic cross-sectional view of a display device according to the present invention.

As shown in FIG. 17, the display device 800b includes a liquid crystal panel 810b and a backlight unit including a light source 820b providing a blue light B, a light guide plate 830b, an optical sheet 840b, a reflective sheet 850b, a housing 861b, a bottom frame 862b and an optic change part 870b. The backlight unit is disposed under the liquid crystal panel 810b and provides a white light W onto the liquid crystal panel 810b.

The optic change part 870b is disposed on a lower surface of the reflective sheet 850b. In this instance, a protection sheet (not shown) may be attached onto the lower surface of the reflective sheet 850b to protect the optic change part 870b. Namely, the optic change part 870b is disposed between the reflective sheet 850b and the protection sheet.

The optic change part 870b includes a yellow fluorescent ink 380i (of FIG. 8). The yellow fluorescent ink 380i includes a yellow fluorescent material 381i (of FIG. 8) in a transparent acryl resin 383i (of FIG. 8).

The blue light B from the light source 820b is changed into a white light W by the optic change part 870b. Namely, the leaked light from the light guide plate 830b is reflected by the reflective sheet 850b, and the blue light B is changed into the white light W by the optic change part 870b on the reflective sheet 850b.

Alternatively, the backlight unit may further include another optic change part on an upper surface of the reflective sheet 850b.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A backlight unit, comprising:
a light source providing a blue light;
a light guide plate of glass at a side of the light source;
an optical sheet on the light guide plate;
a reflective sheet under the light guide plate; and
an optic change part including a yellow fluorescent material,
wherein the blue light is changed into a white light by the optical change part.

2. The backlight unit according to claim 1, wherein the light source includes:
a printed circuit board;
a blue light emitting diode array arranged on a first surface of the printed circuit board; and
a heat-radiating part on a second surface of the printed circuit board.

3. The backlight unit according to claim 1 or 2, further comprising:
a housing on an inner side of which the light source is attached;
a bottom frame providing a space for the light source, the light guide plate, the optical sheet and the reflective sheet; and
a supporting part between the bottom frame and the reflective sheet and supporting the light guide plate and the reflective sheet.

4. The backlight unit according to any one of claims 1 to 3, wherein the optic change part is disposed over or under the light guide plate.

5. The backlight unit according to claim 4, wherein the optic change part includes:
a base layer; and
a cover layer,
wherein the yellow fluorescent material is positioned between the base layer and the cover layer, and each of the base layer and the cover layer includes one of polycarbonate (PC), PMMA, polystyrene (PS), a co-polymer of PS and PMMA and glass.

6. The backlight unit according to claim 4, wherein the optic change part includes a base layer,
wherein the yellow fluorescent material is coated on the base layer, and the base layer includes one of polycarbonate (PC), PMMA, polystyrene (PS), a co-polymer of PS and PMMA and glass.

7. The backlight unit according to any one of claims 1 to 6, wherein the optic change part is disposed on an upper surface or a lower surface of the light guide plate.

8. The backlight unit according to claim 7, wherein the optic change part includes a yellow fluorescent ink including a yellow fluorescent material in a transparent acryl resin.

9. The backlight unit according to any one of claims 1 to 3, wherein the optic change part is disposed on an upper surface or a lower surface of the reflective sheet.

10. The backlight unit according to claim 9, wherein the optic change part includes a yellow fluorescent ink including a yellow fluorescent material in a transparent acryl resin.

11. A display device, comprising:
a liquid crystal panel; and
a backlight unit according to any one of claims 1 to 10 disposed under the liquid crystal panel and providing a light to the liquid crystal panel.
